Europäisches Patentamt

European Patent Office

Office européen des brevets

(19)

(11) Veröffentlichungsnummer : **0 106 789**
**B1**

(12) **EUROPÄISCHE PATENTSCHRIFT**

(45) Veröffentlichungstag der Patentschrift :
04.03.87

(51) Int. Cl.⁴ : **B 60 Q   9/00**, B 60 K 41/06

(21) Anmeldenummer : **83710056.9**

(22) Anmeldetag : **31.08.83**

(54) Schaltanzeige für eine Gangschaltung.

(30) Priorität : 09.10.82 DE 3237517

(43) Veröffentlichungstag der Anmeldung :
25.04.84 Patentblatt 84/17

(45) Bekanntmachung des Hinweises auf die Patenterteilung : 04.03.87 Patentblatt 87/10

(84) Benannte Vertragsstaaten :
DE GB IT SE

(56) Entgegenhaltungen :
DE-A- 2 748 227
DE-A- 2 836 082
DE-A- 2 923 986
DE-A- 2 926 070
DE-A- 3 101 056
GB-A- 2 057 988
GB-A- 2 084 524
US-A- 4 150 497

(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred
WABCO Westinghouse Fahrzeugbremsen GmbH Am
Lindener Hafen 21 Postfach 91 12 80
D-3000 Hannover 91 (DE)

Jouve, 18, rue St-Denis, 75001 Paris, France

**Beschreibung**

Die Erfindung bezieht sich auf eine Schaltanzeige für eine Gangschaltung gemäß dem Oberbegriff des Patentanspruchs 1.

Es sind bereits Gangschaltungen bekannt, welche eine zusätzliche Einrichtung zur Anzeige von Schaltempfehlungen aufweisen (DE-A-31 01 056).

Diese Empfehlungen geben dem Fahrer an, wann er zur Erzielung eines geringstmöglichen Kraftstoffverbrauchs herunter- oder heraufschalten sollte. Zur Anzeige sind verschiedenfarbige Lampen für Herauf- und Herunterschalten und auch akustische Melder bekannt (DE-A-27 48 227).

Es ist auch eine Gangschaltung bekannt, welche den empfohlenen Gang direkt mit der Nummer des Ganges optisch anzeigt (DE-A-28-36 082).

Nachteilig an den bekannten Anzeigen ist, daß nicht erkennbar ist, welcher Gang gerade eingeschaltet ist. Dies ist dann wichtig, wenn bei einem leeren Nutzfahrzeug mit vielen Gängen empfohlen wird, ein oder zwei Gänge zu überspringen. Um sich hierauf einstellen zu können, braucht der Fahrer auch eine Information über den gerade eingelegten Gang.

Der Erfindung liegt die Aufgabe zugrunde, eine Schaltanzeige der eingangs genannten Art anzugeben, welche dem Fahrer eine umfassende Information bietet.

Diese Aufgabe wird durch die im kennzeichnenden Teil des Patentanspruchs 1 enthaltene Erfindung gelöst. Die Unteransprüche enthalten zweckmäßige Weiterbildungen der Erfindung.

Ein Ausführungsbeispiel der Erfindung wird im folgenden anhand einer Zeichnung näher erläutert.

Eine elektronische Auswerteschaltung 3 empfängt Eingangssignale von einem Gangsensor 1. Dieser tastet die Stellung eines Schalthebels 2 ab. Der Auswerteschaltung 3 werden weiter Daten aus einem Getriebe 4, wie z. B. die Getriebeausgangsdrehzahl, die Motordrehzahl und der eingelegte Gang zugeführt.

Aus den eingegebenen Daten berechnet die Auswerteschaltung 3, deren genauer Aufbau nicht Gegenstand der Erfindung ist, den zu dem jeweiligen Fahrzustand passenden empfohlenen Gang. Dieser wird auf einer im Sichtfeld des Fahrers liegenden Schaltanzeige 10 angezeigt. Wenn der Fahrer mittels des Schalthebels 2 diesen Gang vorgewählt hat, bewirkt die Auswerteschaltung 3 das Einlegen dieses Ganges im (hilfskraftunterstützten) Getriebe 4.

Die Schaltanzeige 10 ist so aufgebaut, daß auf einem Feld 5 die Nummer des gerade eingelegten Ganges, hier der dritte Gang, und auf zwei separaten Feldern 6, 7 die Schaltempfehlung zum Herauf- oder Herunterschalten angezeigt wird. Die Felder 5, 6, 7 sind hintereinander in Fahrtrichtung des Fahrzeuges angeordnet. Das Feld 5 zur Anzeige des gerade eingelegten Ganges liegt in der Mitte der drei Felder. Die Schaltempfehlung zum Herauf- oder Herunterschalten erscheint auf dem Feld, hier Feld 6, welches in Richtung der zum Schalten auszuführenden Bewegung des Schalthebels 2 liegt. Im gezeichneten Beispiel wird empfohlen, den vierten Gang zu überspringen und in den fünften Gang hochzuschalten.

Der Abstand der Felder 6 und 7 ist so groß ausgebildet, daß der Fahrer auch ohne direktes Fixieren der Anzeige erkennen kann, ob er Herauf- oder Herunterschalten muß. Dies bedeutet gegenüber einer Schaltanzeige auf nur einem Feld eine erhebliche Verbesserung.

Es ist weiter zweckmäßig, daß das Feld 6 für die Schaltempfehlung für ein Heraufschalten in Fahrtrichtung vor oder über dem Feld 5 angeordnet ist. Entsprechend ist das Feld 7 für die Schaltanzeige für ein Herunterschalten hinter oder unter dem Feld 5 angeordnet.

Wie bereits beschrieben, wird als Schaltempfehlung die Nummer des empfohlenen Ganges angezeigt. Daneben kann zusätzlich durch Lampen 8, 9 noch die Schaltrichtung angezeigt werden.

Falls der empfohlene Gang mit dem gerade eingelegten übereinstimmt, wird in den Feldern 6 und 7 nichts angezeigt.

Bei Stillstand des Fahrzeugs erscheint auf dem oberen Feld 6 die Nummer des zum Anfahren zu wählenden Vorwärtsganges. Dies kann je nach Beladung des Fahrzeuges der erste oder der zweite Gang sein. Auf dem unteren Anzeigefeld 7 erscheint der Rückwärtsgang.

Falls der Fahrer versucht, einen Gang zu wählen, der von der dann zu erwartenden Drehzahl her unzulässig ist, wird dies von der Auswerteschaltung 3 erkannt. Auf den Feldern 6 und 7 erfolgt dann keine Anzeige.

Die beschriebene Schaltanzeige läßt sich besonders vorteilhaft in Verbindung mit einem Schalthebel verwenden, welcher nur drei Stellungen, nämlich Heraufschalten, Neutral, Herunterschalten aufweist. Diese Art der Schaltung ist mit einem Informationsverlust für den Fahrer verbunden, da nicht mehr jedem Gang eine bestimmmte Stellung des Schalthebels zugeordnet ist. Durch die erfindungsgemäße Schaltanzeige kann der Fahrer durch eine flüchtige Ablesung, ohne genau auf die Anzeige zu sehen, eine optimale Fahrweise gestalten. Weiter kann er durch genaueres Ablesen der Schaltanzeige seine Fahrweise noch besser an gegebene schwierige Fahrsituationen, wie z. B. im Gebirge, anpassen. Durch die beschriebene Schaltanzeige ist es dem Fahrer möglich, Kraftstoff zu sparen.

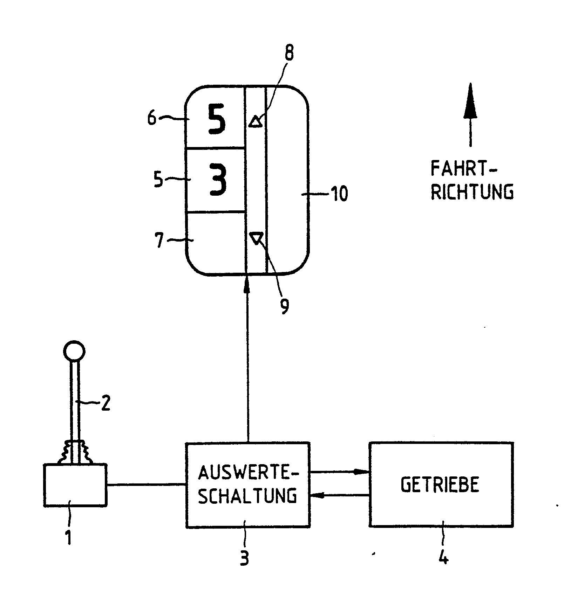

**Patentansprüche**

1. Schaltanzeige (10) für eine Gangschaltung für ein Fahrzeug-Getriebe, mit einer Auswerteschaltung (3), die aufgrund von Signalen über den Fahrzustand eines Fahrzeugs den jeweils günstigsten Gang ermittelt, dadurch gekennzeichnet, daß die Schaltanzeige (10) sowohl den gerade eingelegten Gang als auch den als jeweils günstigsten ermittelten Gang anzeigt.

2. Schaltanzeige nach Anspruch 1, dadurch gekennzeichnet, daß die Schaltanzeige (10) auf einem Feld (5) die Nummer des gerade eingelegten Ganges bzw. die Neutralstellung angibt, und auf einem oder zwei separaten Feldern (6, 7) eine Schaltempfehlung zum Herauf- oder Herunterschalten anzeigt.

3. Schaltanzeige nach Anspruch 1 bis 2, dadurch gekennzeichnet, daß die Felder (5, 6, 7) hintereinander in Fahrtrichtung angeordnet sind, und daß das Feld (5) zur Anzeige des eingelegten Ganges in der Mitte liegt.

4. Schaltanzeige nach Anspruch 1 bis 3, dadurch gekennzeichnet, daß die Schaltempfehlung zum Herauf- oder Herunterschalten auf dem Feld (6, 7) erscheint, welches in Richtung der zum Schalten auszuführenden Bewegung des Schalthebels (2) liegt.

5. Schaltanzeige nach Anspruch 1 bis 4, dadurch gekennzeichnet, daß das Feld (6) für die Schaltempfehlung für ein Heraufschalten in Fahrtrichtung vor oder über dem Feld (5) angeordnet ist, und daß das Feld (7) für die Schaltanzeige für ein Herunterschalten hinter oder unter dem Feld (5) angeordnet ist.

6. Schaltanzeige nach Anspruch 1 bis 5, dadurch gekennzeichnet, daß als Schaltempfehlung die Nummer des empfohlenen Ganges angezeigt wird.

7. Schaltanzeige nach Anspruch 1 bis 6, dadurch gekennzeichnet, daß bei stehendem Fahrzeug im Feld (6) der zum Anfahren empfohlene Vorwärtsgang und im Feld (7) der Rückwärtsgang angezeigt wird.

## Claims

1. Gear-change indicator (10) for a gear-changing system for a vehicle transmission, having an evaluating circuit (3) which, on the basis of signals relating to the driving conditions of a vehicle, determines the most favourable gear, characterised in that the gear-change indicator (10) indicates both the gear engaged and the gear determined as being the most favourable.

2. Gear-change indicator according to claim 1, characterised in that the gear-change indicator (10) indicates the number of the gear engaged or neutral at one place (5) and indicates at one or two separate places (6, 7) a gear-change recommendation for changing to a higher or lower gear.

3. Gear-change indicator according to claims 1 and 2, characterised in that the places (5, 6, 7) are arranged one behind the other in the direction of travel and that the place (5) for indicating the gear engaged is located in the centre.

4. Gear-change indicator according to claims 1 to 3, characterised in that the gear-change recommendation for changing to a higher or lower gear appears at the place (6, 7) that lies in the direction in which the gear lever (2) is to be moved in order to change the gear.

5. Gear-change indicator according to claims 1 to 4, characterised in that the place (6) for the gear-change recommendation for changing to a higher gear is arranged in front of or above the place (5) in the direction of travel and that the place (7) for indicating a gear-change to a lower gear is arranged behind or below the place (5).

6. Gear-change indicator according to claims 1 to 5, characterised in that the number of the recommended gear is indicated as the gear-change recommendation.

7. Gear-change indicator according to claims 1 to 6, characterised in that when the vehicle is stationary, the forward gear recommended for driving on is indicated at place (6) and the reverse gear is indicated at place (7).

## Revendications

1. Indicateur de vitesse (10), pour un dispositif de changement de vitesse d'une boîte de vitesses ou transmission d'un véhicule, comprenant un circuit d'évaluation (3), qui détermine chaque fois la vitesse ou le rapport de transmission le plus favorable sur la base de signaux relatifs à l'état de marche du véhicule, caractérisé en ce que l'indicateur (10) affiche à la fois la vitesse engagée et la vitesse déterminée comme étant la plus favorable à ce moment.

2. Indicateur selon la revendication 1, caractérisé en ce que l'indicateur (10) affiche la vitesse engagée ou la position neutre dans une zone ou case (5) de l'indicateur et affiche une recommandation pour passer une vitesse supérieure ou pour rétrograder dans une ou deux cases séparées (6, 7).

3. Indicateur selon les revendications 1 et 2, caractérisé en ce que les cases (5, 6, 7) sont disposées l'une derrière l'autre dans le sens de marche et que la case (5) pour l'affichage de la vitesse engagée se trouve au milieu.

4. Indicateur selon les revendications 1 à 3, caractérisé en ce que la recommandation pour le passage d'une vitesse supérieure ou pour rétrograder apparaît dans la case (6, 7) qui se trouve dans la direction du mouvement à effectuer à cet effet par le levier de changement de vitesse (2).

5. Indicateur selon les revendications 1 à 4, caractérisé en ce que la case (6) pour la recommandation de passage d'une vitesse supérieure est disposée, dans le sens de marche, devant ou au-dessus de la case (5) pour l'affichage de la vitesse engagée et que la case (7) pour la recommandation de rétrograder est disposée derrière ou au-dessous de la case (5) pour l'affichage de la vitesse engagée.

6. Indicateur selon les revendications 1 à 5, caractérisé en ce que la recommandation est affichée sous la forme du numéro de la vitesse recommandée.

7. Indicateur selon les revendications 1 à 6, caractérisé en ce que, lorsque le véhicule est à l'arrêt, la vitesse avant recommandée pour le départ est affichée dans la case (6) située à l'avant et la vitesse recommandée pour la marche arrière est affichée dans la case (7) située à l'arrière.

8

6    **5**

5    **3**

7

10

9

FAHRT-
RICHTUNG

2

1

AUSWERTE-
SCHALTUNG

GETRIEBE

3

4